# EUROPÄISCHE PATENTANMELDUNG

(11) **EP 3 767 987 A1**
(43) Veröffentlichungstag der Anmeldung: **20.01.2021**
(21) Anmeldenummer: 19187364.5
(22) Anmeldetag: 19.07.2019
(51) Int. Cl.: H04W 16/22, H04W 16/18, H04W 24/06

(54) **VERFAHREN ZUM OPTIMIEREN EINES FUNK-FELDES MITTELS SIMULATION**

(71) Anmelder: Siemens Aktiengesellschaft, 80333 München (DE)
(72) Erfinder: Steindl, Günter, 92284 Poppenricht (DE)

(57) **Zusammenfassung**

Die Erfindung betrifft ein Verfahren zum Optimieren mit Hilfe einer Simulation eines Funk-Feldes (FF) eines Funknetzes (FN) für eine industrielle Prozessumgebung (E), wobei innerhalb der Prozessumgebung (E) kommunikationsfähige Assets (A1,...,A4) angeordnet sind, und zur gesicherten Versorgung von Funkkommunikationsverbindungen (F1,...,F4) von Basis-Stationen (B1,B2,B3,B4) zu den kommunikationsfähigen Assets (A1,...,A4) in der Prozessumgebung (E),
in einem ersten Schritt a) wird
- eine physikalische Ausgangs-Topologie (Tᵤᵣ), welche einer Positionierung der Assets (A1,...,A4) innerhalb der Prozessumgebung (E) beschreibt, als Eingangsgröße für die Simulation genutzt, um hinsichtlich einer optimierten Funk-Versorgung Basis-Positionen (B1_{x,y}, B2_{x,y}, B3_{x,y}, B4_{x,y}) der Basis-Stationen (B1,B2,B3,B4) bezogen auf Asset-Positionen (A1_{x,y}, A2_{x,y}, A3_{x,y}, A4_{x,y}) der Assets (A1,...,A4) zu bestimmen,
wobei in einem weiteren Schritt b)
- eine Ist-Topologie (Tᵢₛₜ) der Prozessumgebung (E) erfasst wird und eine Prüfung auf eine topologische Abweichung zwischen der Ausgangs-Topologie (Tᵤᵣ) und der Ist-Topologie (Tᵢₛₜ) durchgeführt wird, sollte eine Abweichung erkannt werden, so wird,
in einem nächsten Schritt c)
- die neu erfasste Ist-Topologie (Tᵢₛₜ) als Eingangsgröße für eine erneute Simulation genutzt, um hinsichtlich einer optimierten Funk-Versorgung die Basis-Positionen (B1_{x,y}, B2_{x,y}, B3_{x,y}, B4_{x,y}) der Basis-Stationen (B1,B2,B3,B4) bezogen auf die aktuellen Asset-Positionen (A1_{x,y}, A2_{x,y}, A3_{x,y}, A4_{x,y}) der Assets (A1,...,A4) neu zu bestimmen.

## Beschreibung

Die Erfindung betrifft ein Verfahren zum Optimieren eines Funk-Feldes eines Funknetzes mit Hilfe einer Simulation für eine industrielle Prozessumgebung, wobei innerhalb der Prozessumgebung kommunikationsfähige Assets angeordnet sind, und zur gesicherten Versorgung von Funkkommunikationsverbindungen zwischen Basis-Stationen und den kommunikationsfähigen Assets in der Prozessumgebung, wird in einem ersten Schritt a) eine physikalische Ausgangs-Topologie, welche eine Positionierung der Assets innerhalb der Prozessumgebung beschreibt, als Eingangsgröße für die Simulation genutzt, um hinsichtlich einer optimierten Funk-Versorgung Basispositionen der Basis-Stationen bezogen auf Asset-Positionen der Assets zu bestimmen.

Gemäß der Patentanmeldung wird unter Funk-Feld eine zuverlässige Funkabdeckung, quasi eine Netzabdeckung eines örtlich begrenzten Raumes, verstanden. Dabei ist als örtlich begrenzter Raum, insbesondere der Raum oder das Areal einer Prozessumgebung auf die eine industrielle Fertigungsanlage platziert ist, zu verstehen. Unter zuverlässige Funkabdeckung ist zu verstehen, dass man einen einwandfreien Verbindungsaufbau zwischen zwei Teilnehmern hat ohne dass die Funkverbindung zwischendurch abbricht.

Gemäß den Referenzarchitekturmodel Industrie 4.0 (RAMI 4.0) ist ein Asset "Das reale Ding in der physischen Welt", wobei in einer funktionalen Ebene die Funktion eines Assets beschrieben ist. Eine Verwaltungsschale ist ein Datenspeicher aller Informationen zum Asset. Jedes Asset hat seine eigene Verwaltungsschale. Assets im Kontext von Industrie 4.0 sind beispielsweise Anlagengegenstände und Anlageneinzelteile, elektrische Baugruppen, Teilsysteme und Systeme, Maschinen, Anlagen und Anlagenverbünde, Dienste, Konzepte und Ideen, Pläne, Archive, Programme. All diese Assets sind ausgestattet Funkverbindungen zu anderen Teilnehmern aufzunehmen.

Eine weitere Definition des Assets findet sich in der DIN Spec 91345 vom April 2016 "Referenzarchitekturmodel, Industrie 4.0 (RAMI 4.0)".

Mit der Nutzung von Funktechnologien wie Wifi oder 5G, insbesondere private 5G-Netze, ist eine detaillierte Kenntnis der physikalischen Topologie, beispielsweise einer Fabrikhalle, erforderlich. Die Kenntnis der Topologie ist erforderlich um die erforderlichen Antennen und deren Positionen zu bestimmen, um letztendlich im Betrieb zuverlässige Funkverbindungen aufrecht zu erhalten.

Kombiniert man diese Topologieinformationen, insbesondere zweidimensionale Topologieinformationen einer Fabrikanlage, mit einem digitalen Zwilling der aufzubauenden Fabrikanlage, so kann man zusätzlich die Installationspositionen der möglichen Basisstationen bestimmen. Beim Design einer Anlage kann man diese Informationen nutzen um ein Optimum aus Funk-Ausleuchtung und Kostenanteilen an zusätzlichen Geräten, wie beispielsweise Antennen, zu erzielen.

Leider ist der Aufbau einer Produktionsanlage selten ein statisches Gebilde. Bei Produktionsoptimierungen, oder Erweiterungen oder Hinzufügen von neuen Maschinen, Schränken, Zwischenwänden oder Schutzgittern verändert sich stetig die Aufbautopologie einer Fabrikanlage. Damit wird das ursprüngliche Design oder die ursprüngliche Topologie über die Zeit u.U. mit dem ersten Umbau wieder ungültig und im schlimmsten Fall erreichen nicht mehr alle Assets mit ihrer Funkanlage einen Funkkontakt zu den zuvor positionierten Basisstationen. Als Folge leitet die Verbindungsqualität oder wird sogar so schlecht, dass es temporäre Verbindungsausfälle oder Störungen in der Fabrikanlage gibt, welche nicht erwünscht sind.

Um einen einwandfreien Anlagenbetrieb auch nach Umbau einer Anlage zu gewährleisten, wird einem Anlagenbetreiber in der Regel auferlegt, sich bei jedem Umbau mit einem Funk-Feld-Designer abzustimmen, um die Verträglichkeit zu prüfen.

Es ist Aufgabe der vorliegenden Erfindung das Abstimmen mit einem Funk-Feld-Designer auf ein Minimum zu reduzieren und nach Möglichkeit zu automatisieren.

Erfindungsgemäß wird die Aufgabe dadurch gelöst, dass für das eingangs genannte Verfahren in einem weiteren Schritt b) eine Ist-Topologie der Prozessumgebung erfasst wird, und eine Prüfung auf eine topologische Abweichung zwischen der Ausgangs-Topologie und der Ist-Topologie durchgeführt wird, sollte eine Abweichung erkannt werden, so wird, in einem nächsten Schritt c) die neu erfasste Ist-Topologie als Eingangsgröße für eine erneute Simulation genutzt, um hinsichtlich einer optimierten Funk-Versorgung die Basis-Positionen der Basis-Stationen bezogen auf die aktuellen Asset-Positionen der Assets neu zu bestimmen.

Die beschriebene Lösung erlaubt es z.B. täglich automatisch den Anlagenausbau zu kontrollieren umso Veränderungen sofort zu erkennen. Die damit verbundene Funkfeld-/Ausleuchtungsanalyse erlaubt es, möglichen Problemen frühzeitig entgegen zu wirken, z.B. durch Nutzung einer anderen bereits verbauten Antenne. Außerdem wird es möglich, Veränderungen der Antennen-Position zu erkennen, so dass Fehler bei der Lokalisierung der Assets erkannt und vermieden werden können.

In einer alternativen Ausgestaltung der Erfindung wird anstelle der Bestimmung der Basis-Positionen aufgrund der Simulation eine Nutzung einer bereits verbauten anderen Antenne in einen bestimmten Asset vorgeschlagen um die Funkverbindung aufrecht zu erhalten.

Zum Erfassen der physikalischen Ausgangs-Topologie oder der derzeitigen Ist-Topologie wird vorzugsweise eine Drohne mit einem Drohnenflug über der Prozessumgebung verwendet. Die Drohne ist dann vorzugsweise mit Radarsensoren ausgestattet. Zusätzlich kann die Drohne auch noch ein dreidimensionales Kamerabild der Umgebung aufnehmen, welches dann später für eine Veranschaulichung auf einen Bediengerät für einen Benutzer verwendet wird. Das bedeutet, dass das Radarbild und das Kamerabild in einer dreidimensionalen Darstellung für einen Anlagenbetreiber aufbereitet wird.

Vorteilhafterweise wird als Funknetz ein privates Netz, welches auf einer begrenzten Fläche durch einen privaten Netzbetreiber aufgebaut ist, insbesondere ein Betreiber einer industriellen Fertigungsanlage, betrieben. Ein privates Netz bedeutet im Sinne der Erfindung das alle Funktionsbausteine eines Mobilfunknetzes (Funk- und Sendetechnik, Transportnetz, Kernnetz mit Netzfunktionen und Überwachung) getrennt vom öffentlichen Netz betrieben werden und insbesondere steht das private Funknetz über Computerkomponenten mit der zu steuernden Anlage in Verbindung. Auch ist es denkbar, dass ein öffentlicher Provider eine "Network-Slice" zur Verfügung stellt und diese "Slice" wird dann wiederum als privates Anlagen-Netz verwendet.

Die Zeichnung zeigt ein Ausführungsbeispiel der Erfindung. Dabei zeigt die
- FIG 1: ein Funknetz mit einem aufgespannten Funk-Feld über einer industriellen Prozessumgebung und die
- FIG 2: einen Programmablaufplan für ein Verfahren zum Optimieren eines Funk-Feldes eines Funknetzes für eine industrielle Prozessumgebung.

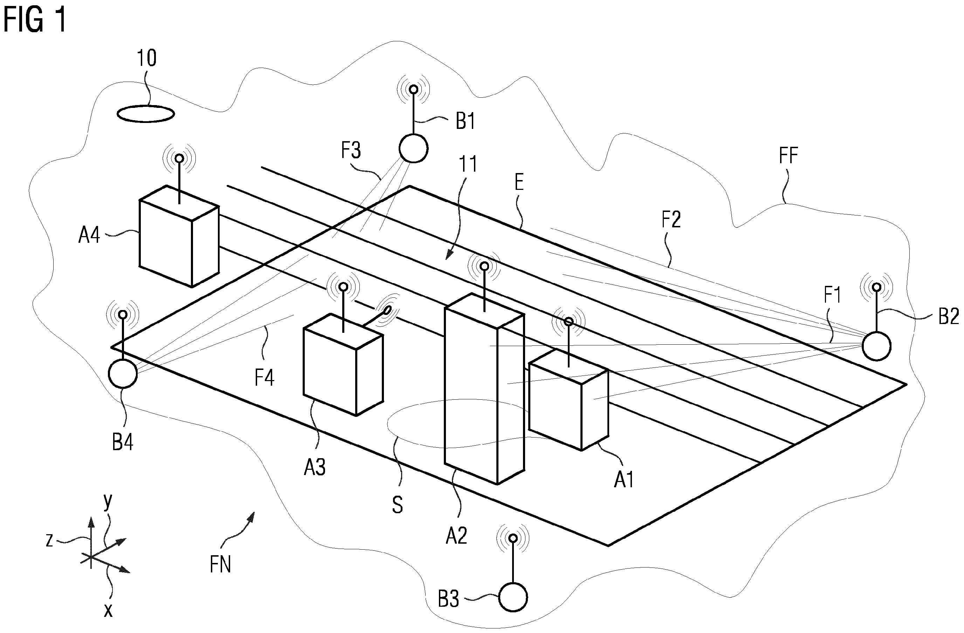

Gemäß FIG 1 ist eine industrielle Prozessumgebung E mit einem ersten Asset A1, einem zweiten Asset A2, einem dritten Asset A3 und einem vierten Asset A4 dargestellt. Die Positionierung der Assets A1,...,A4 folgt einem Fertigungsablauf für ein Produkt. Die Assets A1,...,A4 können mit Basis-Stationen B1,B2,B3, B4 Funkverbindungen F1,F2,F3,F4 aufnehmen. Insbesondere baut die zweite Basis-Station B2 eine erste Funkverbindung F1 zu dem ersten Asset A1 auf, zusätzlich baut die zweite Basis-Station B2 eine zweite Funkverbindung F2 zu dem zweiten Asset A2 auf. Die erste Basis-Station B1 hingegen baut eine dritte Funkverbindung F3 zu dem dritten Asset A3 auf. Die vierte Basis-Station B4 baut eine vierte Funkverbindung F4 zu dem dritten Asset A3 auf. Anzumerken ist, dass unter Basis-Stationen nicht zwangsläufig eine einzelne Basis-Station zu verstehen ist, sondern die Basis-Station B1 bis B4 können auch einzelne aktive Antenneneinheiten sein, welche an einer zentralen Basis-Station angeschlossen sind.

Innerhalb der Prozessumgebung E ist ein Funkschatten S dargestellt. Dieser Funkschatten S entsteht dadurch, dass das Asset A1 und das Asset A2 von ihrer Größenordnung so ausgedehnt sind, dass auf dem dahinterliegenden Bereich ein "Funkloch" entsteht.

Sollte die industrielle Prozessanlage in ihrer Prozessumgebung einmal umgebaut werden und nach dem Umbau ein Asset zufällig in dem Schatten S stehen, so würde dieses Asset keine einwandfreie Funkverbindung mit den Basis-Stationen B1,...,B4 mehr aufbauen können.

Durch eine Drohne 10, welche über die Prozessumgebung E fliegt und eine Ist-Topologie der Prozessumgebung E erfasst, wird eine Prüfung auf eine topologische Abweichung zwischen der Ausgangs-Topologie Tᵤᵣ und der Ist-Topologie Tᵢₛₜ geprüft und sollte hier eine Abweichung erkannt werden, so wird in einem nächsten Schritt C die neu erfasste Ist-Topologie Tᵢₛₜ als Eingangsgröße für eine erneute Simulation genutzt, um hinsichtlich einer optimierten Funk-Versorgung die Basis-Positionen B1_{x,y}, B2_{x,y}, B3_{x,y}, und B4_{x,y} der Basis-Stationen B1,B2,B3,B4 bezogen auf die aktuellen Asset-Positionen A1_{x,y}, A2_{x,y}, A3_{x,y}, A4_{x,y} der Assets A1,...,A4 neu zu bestimmen. Dies würde bedeuten, dass ein neu positioniertes Asset A1,...,A4 im Schatten S nun durch eine verschobene zweite Basis-Station B2 wieder mit einer Funk-Verbindung versorgt werden kann.

Zusätzlich zur Ist-Topologie Erfassung kann die Drohne 10 auch die Feldstärken der den Funkverbindungen F1,F2,F3,F4 zugeordneten Felder messen und diese Messergebnisse später in die Berechnung neuer Positionsdaten B1'_{x,y},...,B4'_{x,y} mit einfließen lassen.

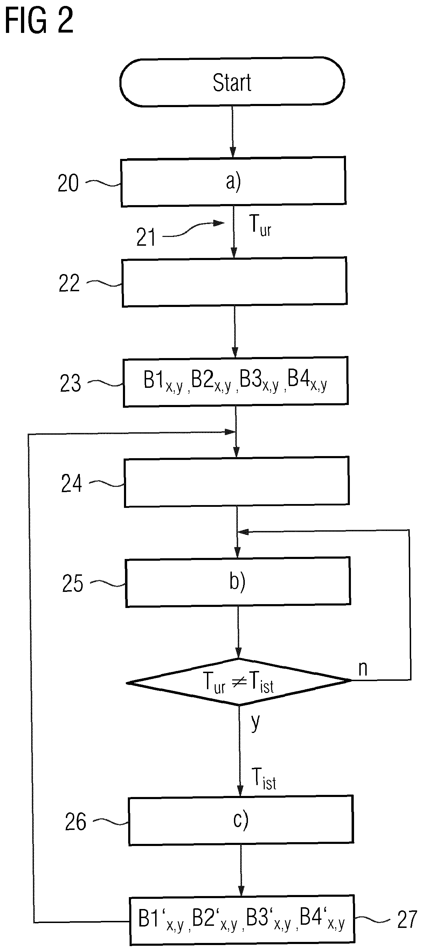

Mit der FIG 2 wird ein Programmablaufplan des erfindungsgemäßen Verfahrens zum Optimieren eines Funk-Feldes für ein Funknetz gezeigt. Nach einem Start wird Schritt a) durchgeführt und eine physikalische Ausgangs-Topologie Tᵤᵣ einer bestehenden industriellen Anlage in einer Prozessumgebung E wird erfasst. Mit dem nächsten Schritt wird die Ausgangs-Topologie Tᵤᵣ für eine Simulation 21,22 bereitgestellt. Die Simulation 21,22 erzeugt wiederum Positionsdaten 23. Nach einer Handlungsanweisung 24 werden in der Prozessumgebung E die Basis-Stationen B1,...,B4 nach dem simulierten Positionsdaten 23 platziert. In einem Prozessschritt 25 Ist-Topologie Tᵢₛₜ erfassen wird gemäß dem Verfahrensschritt b) die Ist-Topologie Tᵢₛₜ der Prozessumgebung E erfasst und es wird anschließend eine Prüfung auf eine Abweichung zwischen der Ausgangs-Topologie Tᵤᵣ und der Ist-Topologie Tᵢₛₜ geprüft, sollte eine Abweichung erkannt werden, so wird in einem nächsten Prozessschritt 26 eine erneute Simulation für optimale Positionen der Basis-Station B1,...,B4 bezogen auf zuverlässige Funkverbindungen zwischen den Basis-Stationen B1,...,B4 und den Assets A1,...,A4 durchgeführt. Die erneute Simulation stellt dann korrigierte Positionsdaten B1'_{x,y},B2'_{x,y},B3'_{x,y},B4'_{x,y} bereit und mit den korrigierten Positionsdaten B1'_{x,y},B2'_{x,y},B3'_{x,y},B4'_{x,y} können die Basis-Stationen B1,B2,B3,B4 erneut in der Prozessumgebung E angeordnet werden.

## Patentansprüche

1. Verfahren zum Optimieren eines Funk-Feldes (FF) eines Funknetzes (FN) mit Hilfe einer Simulation für eine industrielle Prozessumgebung (E), wobei innerhalb der Prozessumgebung (E) kommunikationsfähige Assets (A1,...,A4) angeordnet sind, und zur gesicherten Versorgung von Funkkommunikationsverbindungen (F1,...,F4) zwischen Basis-Stationen (B1,B2,B3,B4) und den kommunikationsfähigen Assets (A1,...,A4) in der Prozessumgebung (E), wird
in einem ersten Schritt a)
- eine physikalische Ausgangs-Topologie (Tᵤᵣ), welche eine Positionierung der Assets (A1,...,A4) innerhalb der Prozessumgebung (E) beschreibt, als Eingangsgröße für die Simulation genutzt, um hinsichtlich einer optimierten Funk-Versorgung Basis-Positionen (B1_{x,y}, B2_{x,y}, B3_{x,y}, B4_{x,y}) der Basis-Stationen (B1,B2,B3,B4) bezogen auf Asset-Positionen (A1_{x,y}, A2_{x,y}, A3_{x,y}, A4_{x,y}) der Assets (A1,...,A4) zu bestimmen,
**dadurch gekennzeichnet, dass**
in einem weiteren Schritt b)
- eine Ist-Topologie (Tᵢₛₜ) der Prozessumgebung (E) erfasst wird und eine Prüfung auf eine topologische Abweichung zwischen der Ausgangs-Topologie (Tᵤᵣ) und der Ist-Topologie (Tᵢₛₜ) durchgeführt, sollte eine Abweichung erkannt werden, so wird,
in einem nächsten Schritt c)
- die neu erfasste Ist-Topologie (Tᵢₛₜ) als Eingangsgröße für eine erneute Simulation genutzt, um hinsichtlich einer optimierten Funk-Versorgung die Basis-Positionen (B1_{x,y}, B2_{x,y}, B3_{x,y}, B4_{x,y}) der Basis-Stationen (B1, B2, B3, B4) bezogen auf die aktuellen Asset-Positionen (A1_{x,y}, A2_{x,y}, A3_{x,y}, A4_{x,y}) der Assets (A1,...,A4) neu zu bestimmen.

2. Verfahren nach Anspruch 1, wobei die Schritte b) und c) zyklisch wiederkehrend ausgeführt werden.

3. Verfahren nach Anspruch 1 oder 2, wobei alternativ zur Bestimmung der Basis-Positionen (B1_{x,y},B2_{x,y},B3_{x,y},B4_{x,y}) eine Nutzung einer in einem Asset (A1,A2,A3,A4) bereits verbauten anderen Antenne (AA) anhand der Simulation vorgeschlagen wird.

4. Verfahren nach einem der Ansprüche 1 bis 3, wobei zur Erfassung der Ist-Topologie (Tᵢₛₜ) der Prozessumgebung (E) ein Drohnenflug verwendet wird.

5. Verfahren nach Anspruch 1, wobei als Funknetz (FN) ein privates Netz, welches auf einer begrenzten Fläche durch einen privaten Netzbetreiber aufgebaut ist, insbesondere einen Betreiber einer industriellen Fertigungsanlage, betrieben wird.
